# EUROPEAN PATENT APPLICATION

(11) **EP 3 955 363 A1**
(43) Date of publication of application: **16.02.2022**
(21) Application number: 20805623.4
(22) Date of filing: 14.05.2020
(51) Int. Cl.: H01M 10/058, H01M 2/16, H01M 10/0525, H01M 10/0565, H01M 10/0569

(54) **LITHIUM ION SECONDARY BATTERY**

(30) Priority: 14.05.2019 JP 2019091046; 14.05.2019 JP 2019091048
(71) Applicant: MAZDA MOTOR CORPORATION, Hiroshima 730-8670 (JP)
(72) Inventor: MASUDA Wataru, Aki-gun, Hiroshima 730-8670 (JP); HANAOKA Teruhiko, Aki-gun, Hiroshima 730-8670 (JP); TAKAHASHI Toshiki, Aki-gun, Hiroshima 730-8670 (JP); MINEOI Susumu, Aki-gun, Hiroshima 730-8670 (JP); SAKAI Hiroyuki, Aki-gun, Hiroshima 730-8670 (JP); FUJITA Hiroki, Aki-gun, Hiroshima 730-8670 (JP)
(74) Representative: Frick, Robert
(86) International application number: PCT/JP2020/019261
(87) International publication number: WO 2020/230847

(57) **Abstract**

An object of the present invention is to solve the problem of a decomposed product of cyclic ester that causes cycle deterioration and storage deterioration of a lithium ion secondary battery. As a solution for the problem, the lithium ion secondary battery includes; a positive electrode; a negative electrode using a graphite-based carbon material as a negative electrode active material; an electrolyte in which lithium salt is dissolved in a nonaqueous solvent containing cyclic ester; and either a barrier layer 15 configured to inhibit contact of the cyclic ester with the negative electrode or a capturing material configured to trap a decomposed product of the cyclic ester generated at the negative electrode.

## Description

### TECHNICAL FIELD

The present invention relates to a lithium ion secondary battery.

### BACKGROUND ART

A lithium ion secondary battery is mainly constituted by positive and negative electrodes that store and release lithium, a nonaqueous electrolyte, and a separator, and is used for, for example, electronic equipment such as a cellular phone or a personal computer and an electric vehicle. The nonaqueous electrolyte has a structure in which lithium salt is dissolved in a nonaqueous solvent such as ethylene carbonate, propylene carbonate, or dimethyl carbonate. Such a lithium ion secondary battery has problems of volatilization of a flammable nonaqueous solvent at high temperatures and release of oxygen from dissolved lithium composite oxide used as a positive electrode active material.

In view of this, Patent Document 1 proposes that safety of a lithium secondary battery is increased by enhancing nonflammability of an electrolyte with the use of an electrolyte including a nonaqueous organic solvent including cyclic carbonate and γ-butyrolactone, halogenated ethylene carbonate, and two or more salts as an electrolyte for a lithium secondary battery. Patent Document 1 also describes that dissolution of the electrolyte is reduced by a coating of halogenated ethylene carbonate on the surface of a negative electrode and that generation of a dissolved gas in storage at high temperatures is reduced by adding a gelling compound to the electrolyte to form a gelled electrolyte.

### CITATION LIST

### PATENT DOCUMENT

PATENT DOCUMENT 1: Japanese Patent No. 4671589

### SUMMARY OF THE INVENTION

### TECHNICAL PROBLEM

Although cyclic ester such as γ-butyrolactone is useful as a nonaqueous solvent of a lithium ion secondary battery, a study of inventors of the present invention shows that cyclic ester is dissolved in a negative electrode to produce a decomposed product that reduces power of the battery. This decomposed product might be diffused to hinder formation of a normal solid electrolyte interphase (SEI) layer on the negative electrode and, if the decomposed product moves, the decomposed product can be a cause of inhibition of movement of lithium ions, such as clogging of a separator.

The present invention can solve problems caused by a decomposed product of cyclic ester that lead to cycle deterioration and storage deterioration of a lithium ion secondary battery.

### SOLUTION TO THE PROBLEM

To solve the problems described above, the inventors of the present invention studied to prevent contact of cyclic ester with a negative electrode. To solve the problems described above, the inventors also studied to prevent diffusion of a decomposed product of cyclic ester between electrodes even if the decomposed product is generated at the electrodes.

A lithium ion secondary battery disclosed here includes a positive electrode; a negative electrode including a graphite-based carbon material as a negative electrode active material; an electrolyte in which lithium salt is dissolved in a nonaqueous solvent containing cyclic ester; and either a barrier layer configured to inhibit contact of the cyclic ester with the negative electrode or a capturing material configured to trap a decomposed product of the cyclic ester generated at the negative electrode.

Specifically, examples of the cyclic ester include γ-butyrolactone, δ-valerolactone, and alkyl substituted bodies such as methyl γ-butyrolactone, ethyl γ-butyrolactone, and ethyl δ-valerolactone.

Cyclic ester has a low vapor pressure, a low viscosity, and a high dielectric constant, and is capable of reducing the viscosity of an electrolyte without decreases of the flash point of an electrolyte and the degree of dissociation of the electrolyte. Thus, discharge characteristics of the battery can be enhanced without an increase in flammability of the electrolyte. Among cyclic esters, γ-butyrolactone is preferable.

In the case of including a barrier layer configured to inhibit contact of the cyclic ester with the negative electrode, the barrier layer inhibits decomposition of the cyclic ester caused by contact with the negative electrode. As a result, the problem of deterioration of the battery caused by a decomposed product of cyclic ester can be solved.

The cyclic ester may be used in combination with other solvents. For example, a mixed solvent of cyclic ester, cyclic carbonate such as ethylene carbonate or propylene carbonate, and/or chain carbonate such as ethyl methyl carbonate may be used.

In one embodiment, as the barrier layer, a negative electrode-side gelled electrolyte layer not containing the cyclic ester may be disposed in a portion adjacent to the negative electrode between the positive electrode and the negative electrode. With this configuration, the negative electrode-side gelled electrolyte layer inhibits contact of cyclic ester in the electrolyte with the negative electrode, and thus, decomposition of the cyclic ester on the negative electrode can be avoided.

In one embodiment, the negative electrode-side gelled electrolyte layer may hold ethylene carbonate.

In the case of using a graphite-based carbon material as a negative electrode active material, if an SEI layer is insufficiently formed on the surface of the negative electrode, solvation Li ions are inserted between graphite layers (co-insertion), decomposition reaction of the solvent progresses between the graphite layers, and the crystal structure of graphite is destroyed. This causes the problem of degradation of cycle stability performance of the battery. As the graphitization degree increases, the battery capacity increases advantageously, but the problem of the co-insertion becomes conspicuous.

On the other hand, in this embodiment, ethylene carbonate facilitates formation of an SEI layer on the surface of the negative electrode (graphite). Thus, co-insertion of solvation Li ions between graphite layers is reduced, and removal of the graphite layers and decomposition of the solvent are reduced. Accordingly, cycle stability performance of the battery can be enhanced.

In one embodiment, a separator may be disposed between the positive electrode and the negative electrode-side gelled electrolyte layer, the separator being impregnated with an electrolyte in which lithium salt is dissolved in a nonaqueous solvent containing cyclic ester. With this configuration, lithium ions easily move between the positive electrode and the negative electrode through the electrolyte of the separator. This is advantageous to enhancement of power of the battery.

In one embodiment, a positive electrode-side gelled electrolyte layer not containing the cyclic ester may be disposed in a position adjacent to the positive electrolyte between the positive electrode and the separator. With this configuration, even if a decomposed product of cyclic ester is generated, the positive electrode-side gelled electrolyte layer can reduce the risk of inhibition of reaction by the decomposed product at the positive electrode side in a manner similar to the negative electrode. Since the gelled electrolyte layer does not contain cyclic ester, it is possible to avoid the problem of deterioration of the battery caused by oxidation decomposition of cyclic ester on the positive electrode due to overcharging, for example.

In one embodiment, the positive electrode-side gelled electrolyte layer may hold an electrolyte in which lithium salt is dissolved in cyclic carbonate. Accordingly, high battery performance can be advantageously obtained.

In the case of including the capturing material configured to trap a decomposed product of the cyclic ester generated at the negative electrode, even if the cyclic ester is decomposed, the decomposed product is trapped by the capturing material, and is not diffused. Thus, deterioration of the battery by the decomposed product can be prevented.

The cyclic ester may be used in combination with other solvents. For example, a mixed solvent of cyclic ester, cyclic carbonate such as ethylene carbonate or propylene carbonate, and/or chain carbonate such as ethyl methyl carbonate may be used.

In one embodiment, the capturing material may be a capturing material disposed between the positive electrode and the negative electrode and constituted by porous nanofibers having a large number of pores configured to trap the decomposed product. That is, a decomposed product of cyclic ester is captured by pores of the porous nanofibers so that diffusion of the decomposed product is thereby inhibited. The pore diameter (opening diameter) of the pores of the porous nanofibers is larger than the molecular diameter of the decomposed product in order to capture the decomposed product in the pores. If the pore diameter is excessively large, the decomposed product easily passes through the pores. Thus, the pore diameter is preferably 100 nm or less.

In one embodiment, a large part of the porous nanofibers may be entangled and form a film-shaped separator configured to prevent short circuit between the positive electrode and the negative electrode, and space that allows lithium ions to pass through the space may be formed between the porous nanofibers of the separator.

With this configuration, the separator is capable of trapping a decomposed product of cyclic ester while allowing lithium ions to pass therethrough.

### ADVANTAGES OF THE INVENTION

According to the present invention, in the lithium ion secondary battery including: the positive electrode; the negative electrode including the graphite-based carbon material as the negative electrode active material; and the electrolyte in which lithium salt is dissolved in the nonaqueous solvent containing cyclic ester, the presence of the barrier layer configured to inhibit contact of the cyclic ester with the negative electrode or the capturing material configured to trap a decomposed product of the cyclic ester generated at the negative electrode can solve the problem of battery deterioration caused by a decomposed product of cyclic ester.

### BRIEF DESCRIPTION OF THE DRAWINGS

[FIG. 1] A perspective view illustrating a partially cut-out internal configuration of a lithium ion secondary battery.
[FIG. 2] A schematic view illustrating generation and movement of a decomposed product of cyclic ester in the lithium ion secondary battery.
[FIG. 3] A schematic cross-sectional view of a lithium ion secondary battery according to a first embodiment of the present invention.
[FIG. 4] A schematic cross-sectional view of a lithium ion secondary battery according to a second embodiment of the present invention.
[FIG. 5] A schematic plan view of a capturing material according to a third embodiment of the present invention.
[FIG. 6] A schematic perspective view illustrating a part of porous nanofibers constituting the capturing material.

### DESCRIPTION OF EMBODIMENTS

Embodiments for carrying out the present invention will be described with reference to the drawings. The following embodiments are merely preferred examples in nature, and are not intended to limit the invention, applications, and use of the applications.

The embodiments relate to lithium ion secondary batteries, and are applicable to electronic equipment, electric vehicles, hybrid vehicles, and so forth.

### <Overall Configuration of Lithium Ion Secondary Battery>

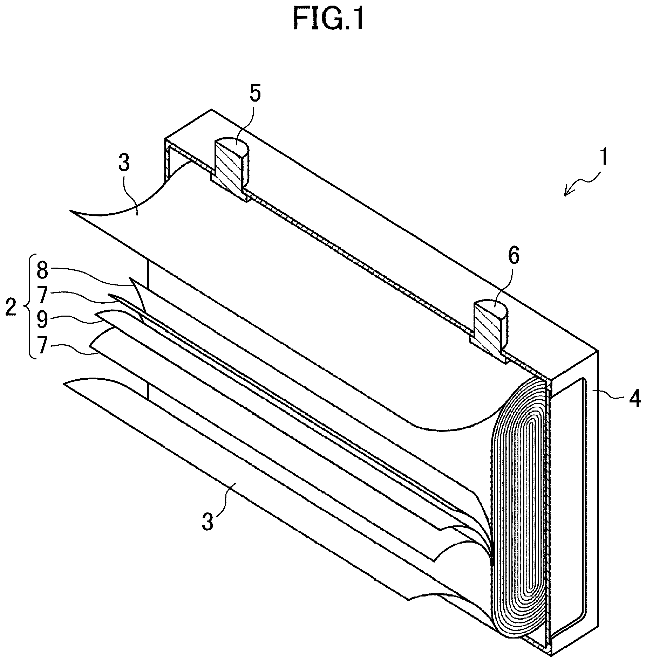

As illustrated in FIG. 1, a lithium ion secondary battery 1 includes a wound body 2 obtained by winding a unit of a plurality of thin films into a flat spiral shape (roll shape), an insulating sheet 3 covering the outer periphery of the wound body 2, a box-shaped case 4 accommodating the wound body 2 and the insulating sheet 3, and a positive electrode terminal 5 and a negative electrode terminal 6 provided on the upper surface of the case 4.

The wound body 2 includes two separators 7, a sheet-like positive electrode 8 connected to the positive electrode terminal 5, and a sheet-like negative electrode 9 connected to the negative electrode terminal 6. The wound body 2 is formed by winding, into a flat spiral shape, a stacked body in which the separators 7, the negative electrode 9, the separators 7, and the positive electrode 8 are stacked in this order.

### [Positive Electrode 8]

The positive electrode 8 is obtained by applying a mixture of a positive electrode active material and agents (e.g., a binder and a conductive agent) onto a current collector that is a conductive metal thin film. Preferable examples of the current collector include aluminium foil.

Preferable examples of the positive electrode active material include a composite metal oxide with lithium including at least one material selected from the group consisting of cobalt, manganese, and nickel, a phosphoric acid-based lithium compound, and a silicic acid-based lithium compound. In particular, phosphoric acid-based lithium is preferably employed. These positive electrode active materials can be used alone or lithium-ion in combination of two or more of them.

Preferable examples of phosphoric acid-based lithium compound include LiMPO₄ (M = transition metal such as Fe, Co, Ni, or Mn) and Li₂MPO₄F (M = transition metal such as Fe, Co, Ni, or Mn) both having olivine crystal structures. In particular, iron phosphate lithium LiFePO₄ is preferable. Examples of silicic acid-based lithium compound include Li₂MSiO₄ (M = transition metal such as Fe, Co, Ni, or Mn).

As the binder, polyvinylidene fluoride (PVdF) is preferably employed. As the conductive agent, carbon black, acetylene black, or carbon nanofiber (CNF), for example, is preferably employed.

### [Negative Electrode 9]

The negative electrode 9 is obtained by applying a mixture of a negative electrode active material and agents (e.g., a binder and a conductive agent) onto a current collector that is a conductive metal thin film. Preferable examples of the current collector include copper foil.

As the negative electrode active material, a graphite-based carbon material, that is, artificial graphite or natural graphite, is preferably employed. From the viewpoint of enhancing storage and release capacity of Li ions, the graphite-based carbon material preferably has a low graphitization degree. For example, the graphitization degree is preferably 0.015 radian or more in terms of the half-power bandwidth of a diffraction peak corresponding to a diffraction angle of a CuKα line of 2θ = 26.6 degrees. Artificial graphite or hard carbon having a low graphitization degree is preferable as a negative electrode active material, but natural graphite having high crystalline alone shows early deterioration, and thus, natural graphite or artificial graphite subjected to surface treatment are additionally used.

Preferable examples of the binder include styrene-butadiene rubber (SBR), a mixture of the styrene-butadiene rubber and carboxymethyl cellulose as a thickener (SBR-CMC), PVdF, an imide-based binder, and a polyacrylic acid-based binder. Preferable examples of the conductive agent include carbon black, acetylene black, and carbon nanofiber CNF.

### [Separators 7]

The separators 7 are porous thin films of a synthetic resin such as polyethylene or polypropylene, and are impregnated with a nonaqueous electrolyte.

### <Problems Caused by Decomposition of Cyclic Ester>

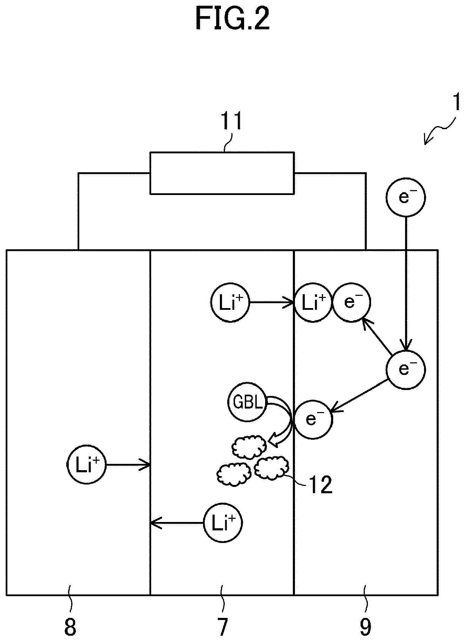

In the lithium ion secondary battery 1 schematically illustrated in FIG. 2, a charger 11 is connected to the positive electrode 8 and the negative electrode 9. In a case where an electrolyte spread in the separators 7 includes cyclic ester, such as γ-butyrolactone (hereinafter referred to as "GBL") as a solvent, the following phenomena occur.

In normal charging, electrons e⁻ move from the positive electrode 8 to the negative electrode 9 through the charger 11, and lithium ions Li⁺ in the electrolyte are stored in the negative electrode 9 from the positive electrode 8 through the electrolyte. In this charging process, if a failure or the like is present in forming the SEI layer in the negative electrode 9, reductive decomposition reaction of GBL occurs in the negative electrode 9. In another case, when the battery 1 is overdischarged, a current collector (copper) of the negative electrode 9 is dissolved in the electrolyte, and reductive decomposition reaction of GBL occurs in the negative electrode 9 accordingly. When the generated decomposed product 12 of GBL is diffused, reformation of a peripheral normal SEI layer is inhibited, and when the decomposed product 12 enters the separators 7, the separators 7 are clogged. Consequently, a SEI formation failure and inhibition of movement of Li⁺ passing through the separators degrade cycle characteristics of the battery 1.

### <Solution to Problems>

### [First Embodiment]

This embodiment has a feature in providing a barrier layer that inhibits contact of cyclic ester such as GBL with the negative electrode 9 in order to prevent decomposition of the cyclic ester on the negative electrode 9.

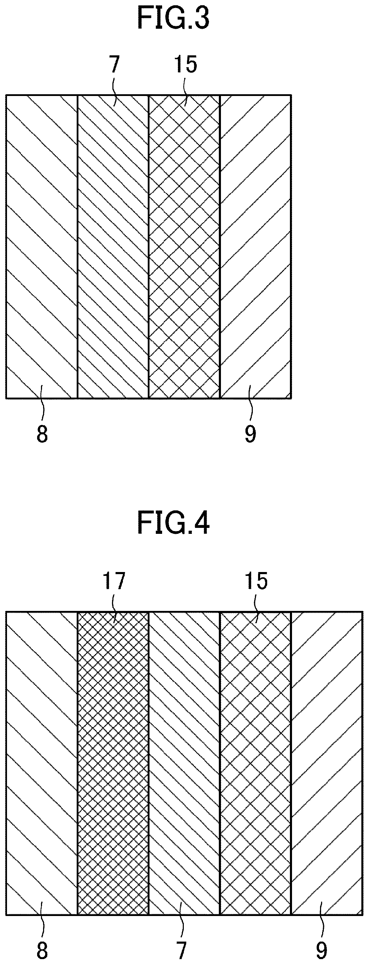

As illustrated in FIG. 3, in this embodiment, a gelled electrolyte layer 15 not containing the cyclic ester is provided as a barrier layer in a portion adjacent to the negative electrode 9 between the positive electrode 8 and the negative electrode 9. In this embodiment, the separators 7 and the negative electrode-side gelled electrolyte layer 15 are disposed between the positive electrode 8 and the negative electrode 9. The negative electrode-side gelled electrolyte layer 15 is laminated on the surface of the negative electrode 9.

The separators 7 is obtained by impregnating a porous film of a synthetic resin (e.g., a polyolefin-based resin) with an electrolyte. A solvent of this electrolyte is a mixed solvent of cyclic ester and cyclic carbonate. The solvent may be a single solvent of cyclic ester such as GBL, or a mixed solvent with, for example, chain carbonate.

The negative electrode-side gelled electrolyte layer 15 is obtained by gelling an electrolyte, that is, a gelled electrolyte layer including the electrolyte and a macromolecular compound holding the electrolyte. In this electrolyte, lithium salt such as lithium hexafluorophosphate LiPF₆ is dissolved in ethylene carbonate as a nonaqueous solvent. As the nonaqueous solvent, other cyclic carbonate such as propylene carbonate or chain carbonate may be employed, for example. This electrolyte does not include the cyclic ester.

Preferable examples of the lithium salt includes LiPO₂F₂, LiBF₄, LiN(SO₂F)₂, LiN(SO₂CF₃)₂, and LiN(SO₂C₂F₅)₂, in addition to LiPF₆ described above. The lithium salt may be used alone or in combination of two or more of the materials described above.

The concentration of lithium salt in the separators 7 and the electrolyte of the negative electrode-side gelled electrolyte layer 15 is, for example, 0.5 M or more and 2.0 M or less.

Examples of the macromolecular compound as a gelling agent of the negative electrode-side gelled electrolyte layer 15 include polyacrylonitrile, polyvinylidene fluoride, polytetrafluoroethylene, polyhexafluoropropylene, polyethylene oxide, a crosslinked body including polyethylene oxide, copolymer of vinylidene fluoride and hexafluoropropylene, a compound including polypropylene oxide or polymethacrylonitrile as a repeating unit, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene, and polycarbonate. From the viewpoint of stability, a macromolecular compound having a polyethylene oxide structure, polyacrylonitrile, polyethylmethacrylate, polyvinylidene fluoride, polyhexafluoropropylene, and copolymer of vinylidene fluoride and hexafluoropropylene are preferable. The amount of addition of the gelling agent to the electrolyte is, for example, about 5% by mass to about 50% by mass of the electrolyte.

In this embodiment, the negative electrode-side gelled electrolyte layer 15 prevents contact of cyclic ester in the electrolyte of the separators 7 with the negative electrode 9. Accordingly, decomposition of cyclic ester on the negative electrode 9 can be avoided so that the problem of deterioration of the battery caused by the decomposed product of cyclic ester can be solved. With ethylene carbonate of the negative electrode-side gelled electrolyte layer 15, an SEI layer can be easily formed on the surface of the negative electrode 9. Thus, co-insertion of solvation Li ions between graphite layers is reduced, removal of the graphite layers and decomposition of the solvent are reduced. Thus, cycle stability performance of the battery can be enhanced. On the other hand, the separators 7 include the electrolyte using a mixed solvent of cyclic carbonate and cyclic ester in an impregnation state. Thus, lithium ions smoothly move between the positive electrode 8 and the negative electrode 9 through the separators 7. This is advantageous to performance (power) of the battery 1.

### [Second Embodiment]

In embodiment illustrated in FIG. 4, a positive electrode-side gelled electrolyte layer 17 is disposed next to the separator 7 of the embodiment illustrated in FIG. 3.

The positive electrode-side gelled electrolyte layer 17 is obtained by gelling an electrolyte, that is, a gelled electrolyte layer including the electrolyte and a macromolecular compound holding the electrolyte. In this electrolyte, lithium salt such as lithium hexafluorophosphate LiPF₆ is preferably dissolved in cyclic carbonate such as ethylene carbonate or propylene carbonate. This electrolyte does not contain the cyclic ester described above. As the cyclic carbonate, ethylene carbonate is preferably employed.

As the macromolecular compound that is the gelling agent, polyacrylonitrile, for example, can be used, in a manner similar to the negative electrode-side gelled electrolyte layer 15.

Preferable examples of the lithium salt are described above, and one of the example materials may be used alone, or two or more of the materials be used in combination.

In this embodiment, the negative electrode-side gelled electrolyte layer 15 inhibits contact of cyclic ester with the negative electrode 9, and a decomposed product of the cyclic ester is less frequently generated. Even if the decomposition product is generated, the decomposition product easily remains because of gel, and formation of other normal SEI layers is not inhibited on the negative electrode 9. Even if the decomposed product permeates the separators 7 because of, for example, destruction of gel of the negative electrode, the positive electrode-side gelled electrolyte layer 17 on the surface of the positive electrode 8 can also reduce the risk of inhibiting surface reaction at the positive electrode side. In addition, lithium ions smoothly move between the positive electrode 8 and the negative electrode 9 through the separators 7. This is advantageous to performance (power) of the battery 1.

In the embodiment illustrated in FIG. 4, the separators 7 impregnated with the electrolyte may be replaced by separators holding the electrolyte in a gelled state. In this case, the lithium ion secondary battery has a structure in which three gelled electrolyte layers of a positive electrode-side layer, a negative electrode-side layer, and an intermediate-side layer are stacked.

### [Third Embodiment]

This embodiment has a feature in which a lithium ion secondary battery includes a capturing material that traps a decomposed product of cyclic ester such as GBL.

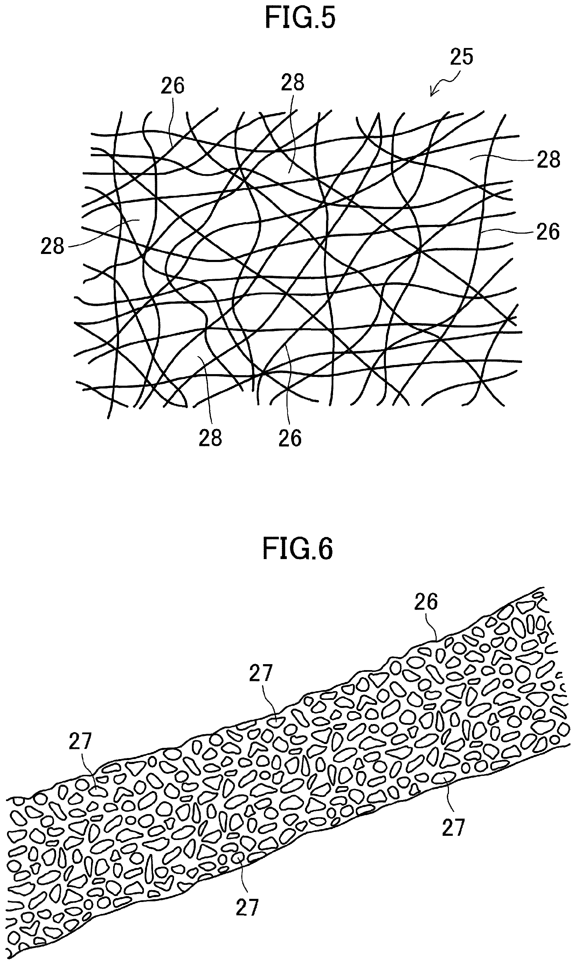

As illustrated in FIG. 5, a capturing material 25 of this embodiment is a membrane body in which a large number of porous nanofibers 26 are entangled, and is disposed as separators 7 in the lithium ion secondary battery 1 illustrated in FIG. 1 or 2.

As illustrated in FIG. 6, each of the porous nanofibers 26 has a diameter of about 0.1 µm to about 1 µm. A large number of pores 27 each having a pore diameter of about 20 nm to about 100 nm and capable of trapping a decomposed product of the cyclic ester are formed at the surfaces of the porous nanofibers 26. As illustrated in FIG. 5, space (1 µm or less, preferably 0.5 µm or less) 28 that allows lithium ions to pass therethrough is formed between fibers in the membrane body in which the large number of porous nanofibers 26 are entangled.

The porous nanofibers 26 can be formed by electrospinning, for example. As a material for the porous nanofibers 26, a polyolefin-based resin (e.g., polypropylene or polyester) and an insulating synthetic resin such as polyacrylonitrile may be employed.

As described above, in this embodiment, the capturing material 25 is formed of the membrane body in which the large number of porous nanofibers 26 are entangled, and is disposed as the separators 7 in the lithium ion secondary battery 1.

Thus, the decomposed product of cyclic ester such as GBL generated on the negative electrode 9 is captured in the individual pores 27 of the porous nanofibers 26, and remains. Accordingly, deterioration of the battery 1 caused by the decomposed product can be prevented. Since lithium ions passes through the space 28 between the porous nanofibers 26, the capturing material 25 effectively functions as separators.

The solvent of the electrolyte spread in the capturing material 25 may be a single solvent of cyclic ester such as GBL, δ-valerolactone, or an alkyl substituted body such as methyl γ-butyrolactone, ethyl γ-butyrolactone, or ethyl δ-valerolactone or may be a mixed solvent of cyclic ester such as GBL and cyclic carbonate such as ethylene carbonate or propylene carbonate.

Preferable examples of the lithium salt include LiPF₆, LiPO₂F₂, LiBF₄, LiN(SO₂F)₂, LiN(SO₂CF₃)₂, and LiN(SO₂C₂F₅)₂. The lithium salt may be used alone or in combination of two or more of the materials described above.

The concentration of the lithium salt in the nonaqueous electrolyte is 0.5 M or more and 2.0 M or less, for example.

### <Others>

In the lithium ion secondary battery, the insulating sheet 3 covering the outer periphery of the wound body 2 may be omitted by winding the separator 7 at the outer periphery around the wound body 2 in one turn. The wound body 2 may be cylindrical instead of flat.

The lithium ion secondary battery may not be of a winding type, and may be in various modes such as a stacked type in which the positive electrodes 8 and the negative electrodes 9 are alternately stacked with the separators 7 interposed therebetween.

### DESCRIPTION OF REFERENCE CHARACTERS

- 1: lithium ion secondary battery
- 7: separator
- 8: positive electrode
- 9: negative electrode
- 11: charger
- 12: decomposed product
- 13: stacked layer of decomposed product
- 15: negative electrode-side gelled electrolyte layer (barrier layer)
- 17: positive electrode-side gelled electrolyte layer
- 25: capturing material (separator)
- 26: porous nanofibers
- 27: pore
- 28: space

## Claims

1. A lithium ion secondary battery comprising:
a positive electrode;
a negative electrode including a graphite-based carbon material as a negative electrode active material;
an electrolyte in which lithium salt is dissolved in a nonaqueous solvent containing cyclic ester; and
either a barrier layer configured to inhibit contact of the cyclic ester with the negative electrode or a capturing material configured to trap a decomposed product of the cyclic ester generated at the negative electrode.

2. The lithium ion secondary battery according to claim 1, wherein
the cyclic ester is γ-butyrolactone.

3. The lithium ion secondary battery according to claim 1 or 2, wherein
as the barrier layer, a negative electrode-side gelled electrolyte layer not containing the cyclic ester is disposed in a portion adjacent to the negative electrode between the positive electrode and the negative electrode.

4. The lithium ion secondary battery according to claim 3, wherein
the negative electrode-side gelled electrolyte layer holds ethylene carbonate.

5. The lithium ion secondary battery according to claim 3 or 4, wherein
a separator is disposed between the positive electrode and the negative electrode-side gelled electrolyte layer, the separator being impregnated with an electrolyte in which lithium salt is dissolved in a nonaqueous solvent containing cyclic ester.

6. The lithium ion secondary battery according to claim 5, wherein
a positive electrode-side gelled electrolyte layer not containing the cyclic ester is disposed in a position adjacent to the positive electrolyte between the positive electrode and the separator.

7. The lithium ion secondary battery according to claim 6, wherein
the positive electrode-side gelled electrolyte layer holds an electrolyte in which lithium salt is dissolved in cyclic carbonate.

8. The lithium ion secondary battery according to claim 1 or 2, wherein
the capturing material is a capturing material disposed between the positive electrode and the negative electrode and constituted by porous nanofibers having a large number of pores configured to trap the decomposed product.

9. The lithium ion secondary battery according to claim 8, wherein
each of the pores of the porous nanofibers has a diameter of 100 nm or less.

10. The lithium ion secondary battery according to claim 8 or 9, wherein
a large part of the porous nanofibers is entangled and forms a film-shaped separator configured to prevent short circuit between the positive electrode and the negative electrode, and
space that allows lithium ions to pass through the space is formed between the porous nanofibers of the separator.
